# EUROPEAN PATENT SPECIFICATION

(11) **EP 2 369 784 B1**
(45) Date of publication and mention of the grant of the patent: **08.01.2014**
(21) Application number: 10158085.0
(22) Date of filing: 26.03.2010
(51) Int. Cl.: H04L 12/24, H04M 11/06, H04L 12/12, H04L 12/28

(54) **Device and method for communication in a predefined mode**
Vorrichtung und Methode für Kommunikation in einem vordefinierten Modus
Dispositif et procédé de communication en un mode prédéterminé

(43) Date of publication of application: 28.09.2011
(73) Proprietor: Alcatel Lucent, 75007 Paris (FR)
(72) Inventor: Spruyt, Paul, 3001, Heverlee (BE); Defoort, Frank, 9150, Kruibeke (BE); Vanderhaegen, Dirk, 1780, Wemmel (BE); Troch, Wim, 1880 Kapelle-Op-Den-Bos (BE)
(74) Representative: ALU Antw Patent Attorneys

(56) References cited:
- WO-A1-00/41354
- WO-A2-2007/146048
- US-A1- 2004 255 056
- US-B1- 7 411 998
- "Handshake procedures for digital subscriber line (DSL) transceivers; G.994.1 (07/02)" ITU-T STANDARD SUPERSEDED (S), INTERNATIONAL TELECOMMUNICATION UNION, GENEVA, CH, no. G.994.1 (07/02), 29 July 2002 (2002-07-29), XP017401240
- "Physical layer management for digital subscriber line (DSL) transceivers; G.997.1 (04/09)" ITU-T STANDARD, INTERNATIONAL TELECOMMUNICATION UNION, GENEVA ; CH, no. G.997.1 (04/09), 22 April 2009 (2009-04-22), XP017433870

## Description

### Field of the Invention

The present invention generally relates to the field of data transmission technology and more in particular to communication devices therefore. The invention also relates to a method of communicating between such communication devices.

### Background of the Invention

In the xDSL world the ADSL2 standard is known since quite a few years. ADSL2 (ITU G.992.3 and G.992.4) adds to ADSL further features and functionality targeted at improving performance and interoperability, and adds support for new applications, services, and deployment scenarios. Among the changes are improvements in data rate and reach performance, rate adaptation, diagnostics and stand-by mode, to name a few.

First-generation ADSL transceivers operate in full-power mode day and night, even when not in use, unless the Customer Premises Equipment (CPE) is switched off. With several hundreds of millions of deployed ADSL lines deployed, a significant amount of electricity can be saved if the ADSL transceivers would enter a low-power mode when there is no (or only little) data to transmit, just like computers enter a low-power mode when there is no activity for some configured time. To address these concerns, the ADSL2 standard brings in the L2 (Link State 2) low-power management mode that helps reduce overall power consumption while maintaining ADSL's "always-on" functionality for the user. The L2 mode enables statistical power savings at the ADSL transceiver unit in the DSLAM by automatically entering and exiting a low power L2 mode based on the amount of traffic over the ADSL connection. As an example, in case of high-speed internet access, and if L2 is active, ADSL2 operates in full power mode (called "L0" power mode, i.e. the normal showtime mode) when large amounts of data are being downloaded in order to maximize the download speed. When Internet traffic decreases, such as when a user is reading a long text page, ADSL2 systems can transition into L2 low power mode, in which the data rate is significantly decreased and overall power consumption is reduced. As soon the user initiates a new file download, the ADSL2 system can instantly exit the L2 mode and re-enter the L0 mode at maximum data rate. The L2 entry/exit mechanisms and resulting data rate adaptations are accomplished without any service interruption or even a single bit error, and as such, are not noticed by the user. The L2 power mode is one of the most important innovations of the ADSL2 standard.

The ADSL2+ standard (ITU G.992.5) further extends the capacity offered by ADSL2. ADSL2 and ADSL2+ are in the further description below referred to with the general term ADSL2x.

The L2 mode is intended to pass still a low amount of traffic (e.g. alive checks) and standards have defined seamless transitions (no data loss) between L0 and L2 and back to L0 as already mentioned. The advantage of L2 in terms of power saving of the DSL transmitter at the central office (CO) can amount to 75% on line driver level, which results in reduced energy consumption of the ADSL2x line. Reduction of energy consumption is in general getting more and more attention worldwide, as evidenced by the Code of Conduct on Energy Consumption of Broadband Equipment defined by the European Commission and similar requirements on energy efficiency for telecommunication equipment in the USA, "green" announcements and initiatives.

The L2 mode has been implemented by several DSL chipset vendors, both at the central office (CO) and at customer premises equipment (CPE) side (i.e. the remote terminal side). However, very few DSL operators, if any, are deploying this L2 mode today, because of a side-problem appearing when enabling L2. This side effect is that the fluctuating power of such DSL line causes fluctuating crosstalk to other DSL lines in same cable bundle, which may cause resynchronizations of DSL lines. Recently a solution to that problem has been proposed, namely applying artificial noise or virtual noise on all DSL lines, next to enabling L2, all lines can be protected against the varying crosstalk caused by the L2 mode. However, one shortcoming remains that prevents deployment of L2 in the field without trouble. Indeed, many of the legacy ADSL2x CPEs in the field today that support L2 as a (leaflet) feature, behave improperly when L2 is enabled or activated, due to a poor implementation of L2 in the CPE :
- do not enter the L2 mode when requested by the CO, or
- do not negotiate to lower the power of the CO transmitter when entering the L2 mode, or
- fail to enter the L2 mode, causing a re-initialization (and hence no data transfer during 30 seconds), or
- fail to transit from the L2 mode back to L0 mode at the time of a traffic increase, causing a re-initialization, or
- fail to maintain a stable data link in the L2 state, resulting in transmission errors or even resynchronization of the link when the noise level fluctuates.

Consequently, there is still a need for a solution enabling the L2 mode in the field on large scale, while avoiding impact on the data transfer quality by causing errors or resynchronizations on such lines with a CPE which badly implements L2.

The above sketched problem can also be encountered in other communication systems where interoperability problems between communication devices are encountered and where it cannot be guaranteed that a specific communication mode (like e.g. a low power mode) can be deployed over a communication channel connecting the two communication devices.

Hence, put in more general terms, there is a need for knowing in advance (i.e. before actual deployment) whether or not a specified communication mode can successfully be applied for transferring data over a given communication channel between two communication devices.

US patent no. 7,411,998 discloses a method including establishing a communication channel between a first transceiver and a second transceiver in low power mode, and determining a training parameter using the communication channel. The method also includes performing training in response to determining the training parameter. An associated apparatus, capable of communicating with a transceiver, includes a first and second logic. The first logic is capable of establishing a communication channel with the transceiver in a low power mode. The second logic is capable determining a training parameter using the communication channel, and providing the training parameter to the transceiver.

US patent application publication no. 2004/255056 discloses a method for selecting a mode of operation for at least two modems. First, a handshake procedure is performed in order to determine a set of possible modes of operation supported by said modems. From said set of possible modes of operation, a set of favorable modes of operation is derived. In case there exist two or more favorable modes of operation, a probing-based selection is performed that comprises evaluating respective performances of said favorable modes of operation. The favorable mode of operation with the best performance is selected as a resultant mode of operation. The selection process does not include assessing the capability of establishing communication in a predefined mode by testing the proper operation of that mode. The publication does not specify that the predefined mode could be a Link State 2 mode.

International patent application publication no. WO 00/41354 A1 discloses a method and apparatus for enabling data communication that detects and notifies the opposite terminal of which type of duplexing (e.g., full duplex or half duplex) is used. The capabilities of the communication devices are exchanged between a central location and a remote location. Based upon the quality of the communication channel, and the capabilities of the communication channel, an appropriate communication standard is selected.

ITU-T Recommendation G.994.1 (07/02) discloses handshake procedures for digital subscriber line (DSL) transceivers.

International patent application publication no. WO 2007/146048 A2 discloses an apparatus comprising at least one vectoring engine and a cross-connect coupled to the vectoring engine. The cross-connect is to couple with each of a plurality of customer premises equipment (CPE) devices via a respective DSL loop. An interface is to receive instructions for the cross-connect to couple the vectoring engine to a nonoverlapping subset of the CPE devices via the respective DSL loops. The interface is further to receive instructions for the vectoring engine to apply vectoring to the DSL loop via which to couple one of the CPE devices to the cross-connect.

### Aims of the invention

The present invention aims to provide a device and method to determine if use of a predefined mode of communication over a communication network is enabled.

### Summary

The present invention relates to a device for enabling a predefined mode of communication over a communication line between a first communication device and a second communication device in accordance with claim 1.

Such a device indeed meets the above-mentioned aim. The device comprises an activator means for obtaining information that in one way or another indicates whether it is possible to set up communication in the predefined mode between the two communication devices over the connecting communication channel. In order to perform this task the activator means for example regularly scans the entire network or at least a part thereof. The gathered information is assessed by the analyser means. The analyser means hereby further exploits sensed information from the sensing means to determine whether the end-user terminal properly supports said predefined mode of communication. The activator means is further arranged for acting according to the outcome of that determination, i.e. it can enable or disable the predefined communication mode.

In a preferred embodiment the means for analysing comprises a database of information on the capability of supporting said predefined mode of communication over the communication line between the two communication devices. When information retrieved via the activator and evaluated by the analyser means along with sensing information indicates for example that the communication device being used by the end-user's premises is of a certain type, further information can be retrieved from the database for assisting the means for analysing in determining from the available information whether the predefined mode is supported. The activator can then act accordingly.

Another advantage of having the sensing means is that such a sensor can advantageously be employed when the information received via the activator means reveals that the type of communication device at one side of the communication line does not appear in the database. The device of the invention remains operable, based on the information obtained via the activator means and assessed by the means for analysing.

In a preferred embodiment the information indicative of the capability of establishing communication in the predefined mode comprises information related to the type of the first communication device.

The information indicative of the capability of supporting the predefined mode preferably comprises information related to the type of second communication device, e.g. the hardware version and/or the software version and/or the firmware version of the second communication device.

In one embodiment the activation means is also arranged for obtaining information related to the communication line. The means for determining is then arranged for taking into account that information related to said communication line.

In a most preferred embodiment of the invention the communication network is an ADSL2x network and the predefined mode is a low power mode. The first communication device is then typically located at the central office side and the second communication device is a customer premises equipment.

Advantageously the activation means is implemented in software, e.g. as a script to scan the communication network, communication line after communication line. The script is then further arranged for executing a number of commands for deriving the desired information on the type of end-user. Alternatively, information on the first communication device is derived. In an ADSLx context this first device is typically a transceiver device at the central office, the type of which is to be derived via the activation means. Also the enabling/disabling of communication lines is performed in software.

The invention also relates to a network management device wherein a device for enabling a predefined communication mode as previously described is integrated. The network management device is preferably arranged for monitoring, changing and correcting the behaviour of communication lines.

In another aspect the invention relates to a method for enabling a predefined mode of communication over a communication line between a first and a second communication device in accordance with claim 8.

### Brief Description of the Drawings

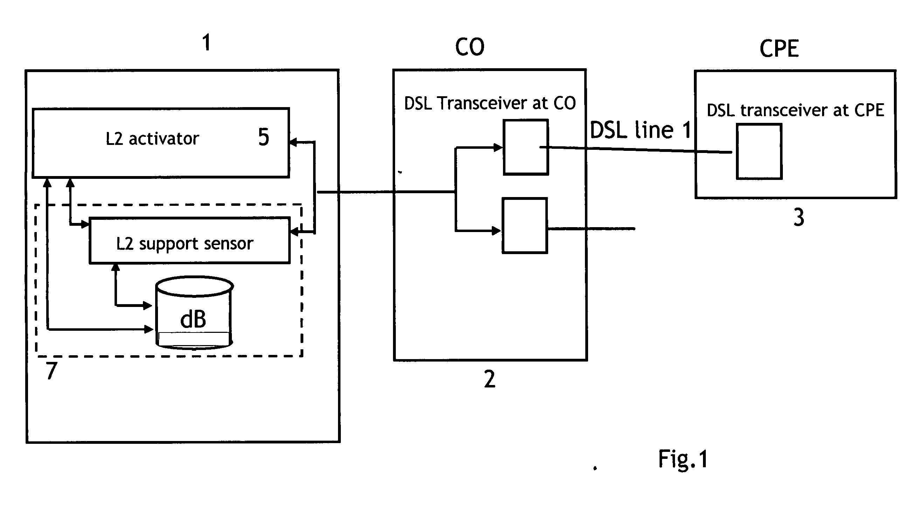

Fig. 1 represents a block scheme of an embodiment of the device according to the present invention.

### Detailed Description of the Invention

The solution according to the present invention proposes a device having a mechanism that enables the predefined mode (e.g. the L2 state) only on lines which support that specific mode correctly. In order to achieve this, the device contains the following components :
- an activator means that regularly scans the entire network and is capable of enabling/disabling the predefined mode (e.g. the L2 state), and
- means for analysing information on whether the communication devices and the communication channel between them properly support the specific communication mode in question. The information is obtained via the activator means and via the sensing means provided in the means for analysing.
Fig.1 illustrates the proposed solution using the example of the L2 state as predefined mode. The communication devices are a central office CO (2) and a customer premises equipment (3), each provided with a DSL transceiver. This example will be used throughout the rest of this description for explaining the present invention.

The means for analysing the information can be implemented in several possible ways. The means comprises one or more sensors for evaluating correct support of L2 by the communication channel (DSL line). In one embodiment the means may also comprise a list of remote terminal (customer premises equipment) types along with an indication of proper L2 support. Preferably the use of a sensor can be combined with the use of lists. Such lists are advantageously stored in a database. Other types of information that can be used in the analysis comprise other database info that the operator typically maintains, like the user service profile (high speed Internet, video, VoIP, business) or even his account number or the type of contract, or the location or the CO type. The type of remote terminal can for example be identified by information relating to hardware version, software version, firmware version or any combination thereof.

For further illustration a specific example is now provided wherein three lists of remote terminal devices are maintained:
- A 'white' list containing a manually and pro-actively created list (e.g. by a DSL operator) of CPE types which do support L2 correctly. This can be based on preceding lab tests or other a priori info. There is no need to test in the field the good L2 operation on a DSL line with such a CPE type connected.
- A 'black' list comprising an automatically generated list of CPE types that do no support the L2 mode correctly. Such list is populated by the sensor output (if the test yields as result 'failure'). On a line with such a CPE connected, the L2 mode will not be enabled.
- A 'grey' list, which can be an automatically generated list of CPE types that support the L2 mode correctly. Such list is populated by the sensor output (if the preceding sensor test(s) yield(s) as result 'pass').

The activation means is advantageously implemented in software, e.g. as a script that scans regularly the network or a part thereof, line after line, and for each line executes following commands:
- Read the CPE type.
- If CPE type is in white list, then enable the predefined mode for that line (in this case L2).
- If CPE type is on black list, then disable the predefined mode for that line.
- If CPE type is on the grey list, then run the sensor in the analyser means each Nth time this CPE type is found in the grey list. This can be seen as a kind of 'AND' logical function, to make sure that under all different conditions the predefined mode is correctly implemented
   - If sensor results "pass" then enable the predefined mode for this line,
   - if the sensor results "fail" then disable the predefined mode for that line, and move this CPE type from the grey list to the black list,
- If CPE type is still unknown, then run the sensor for further analysis.

The sensing means tests the proper operation of the predefined mode (L2 for example). It activates L2 at a safe time (e.g. during the night when no user traffic is detected on that line) and evaluate the L2 behaviour under various conditions and checks for all possible L2 failures as listed above. Depending on the outcome of the test, the black list and the grey list are updated. In one embodiment it can in turn test if one or more of the previously mentioned problems (not entering the L2 mode when requested by the CO, not negotiating to lower the power at the Co when entering the L2 mode, failing to enter the L2 mode, failing to transit back from L2 to L0 mode, etc...) occur or not.

This invention enables the application of the L2 power-saving mode for ADSL2x lines, resulting in reduced power consumption of the DSL transmitter (e.g. 75% power savings on line driver level, dependent on conditions).

The invention can be combined with the solution mentioned in the background section whereby artificial noise and virtual noise are applied for the safe deployment of the L2 power saving mode. However, it is to be noted that without the present invention, instabilities still occur in the network when L2 is activated, even when artificial and/or virtual noise are enabled, due to faulty L2 implementations in the installed base of ADSL2x CPEs.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Device (1) for enabling a predefined mode of communication over a communication line between a first communication device (2) and a second communication device (3), said first communication device (2) and said second communication device (3) operating according to an ADSL2 or ADSL2+ standard, said device comprising activation means (5) arranged for obtaining information indicative of the capability of establishing communication in said predefined mode over said communication line between said first and said second communication device and means (7) for analysing said information, whereby said activation means is further arranged for activating and deactivating said predefined mode of communication according to the analysis of said information, **characterised in that** said means for analysing comprises a sensing means arranged for assessing the capability of establishing communication in said predefined mode between said first and said second communication device by testing the proper operation of the predefined mode and **in that** said predefined mode is a Link State 2 mode.

2. Device for enabling a predefined mode of communication as in claim 1, whereby said means for analysing further comprises a database of information on the capability of supporting said predefined mode of communication.

3. Device for enabling a predefined mode of communication as in claim 1 or 2, wherein said information indicative of the capability of establishing communication in said predefined mode comprises information related to the type of said first communication device.

4. Device for enabling a predefined mode of communication as in any of claims 1 to 3, wherein said information indicative of indicative of the capability of establishing communication in said predefined mode comprises information related to the hardware version and/or the software version and/or the firmware version of the second communication device.

5. Device for enabling a predefined mode of communication as in any of claims 1 to 4, whereby said activation means (5) is also arranged for obtaining information related to said communication line and whereby said means for analysing is arranged for taking into account said information related to said communication line.

6. Device for enabling a predefined mode of communication as in any of the previous claims, whereby said activation means is implemented in software.

7. Network management device comprising a device for enabling a predefined mode of communication as in any of the previous claims.

8. Method for enabling a predefined mode of communication over a communication line between a first communication device (2) and a second communication device (3), said first communication device (2) and said second communication device (3) operating according to an ADSL2 or ADSL2+ standard, said method comprising the steps of
- obtaining information indicative of the capability of establishing communication in said predefined mode over said communication line between said first and said second communication device, and
- analysing said obtained information for assessing the capability of establishing communication in the predefined mode, enabling said predefined mode of communication if from the previous step is found that communication in the predefined mode is possible
**characterized in that** said analysing step comprises analysing said obtained information along with sensed information indicative of the outcome of a test of the proper operation of the predefined mode, and **in that** said predefined mode is a Link State 2 mode.

## Patentansprüche

1. Vorrichtung (1) zur Freigabe eines vordefinierten Kommunikationsmodus über eine Kommunikationsleitung zwischen einem ersten Kommunikationsgerät (2) und einem zweiten Kommunikationsgerät (3), wobei das besagte erste Kommunikationsgerät (2) und das besagte zweite Kommunikationsgerät (3) gemäß einem ADSL2- oder ADSL+-Standard arbeiten, wobei die besagte Vorrichtung ein Aktivierungsmittel (5), welches für das Einholen von Informationen, die für die Fähigkeit, eine Kommunikation in dem besagten vordefinierten Modus über die besagte Kommunikationsleitung zwischen dem besagten ersten und dem besagten zweiten Kommunikationsgerät aufzubauen, indikativ sind, ausgelegt ist, und Mittel (7) zum Analysieren der besagten Informationen umfasst, wobei das besagte Aktivierungsmittel weiterhin für das Aktivieren und Deaktivieren des besagten vordefinierten Kommunikationsmodus gemäß der Analyse der besagten Informationen ausgelegt ist, **dadurch gekennzeichnet, dass** das besagte Mittel zum Analysieren ein Abtastmittel umfasst, welches für das Beurteilen der Fähigkeit, eine Kommunikation in dem besagten vordefinierten Modus zwischen dem besagten ersten und dem besagten zweiten Kommunikationsgerät aufzubauen, durch Testen des korrekten Betriebs des vordefinierten Modus ausgelegt ist, und dass der besagte vordefinierte Modus ein Link State 2-Modus ist.

2. Vorrichtung zur Freigabe eines vordefinierten Kommunikationsmodus nach Anspruch 1, wobei das besagte Mittel zum Analysieren weiterhin eine Datenbank für Informationen über die Fähigkeit, den besagten vordefinierten Kommunikationsmodus zu unterstützen, umfasst.

3. Vorrichtung zur Freigabe eines vordefinierten Kommunikationsmodus nach Anspruch 1 oder 2, wobei die besagten Informationen, welche für die Fähigkeit, eine Kommunikation in dem besagten vordefinierten Modus aufzubauen, indikativ sind, Informationen in Bezug auf den Typ des besagten ersten Kommunikationsgeräts umfassen.

4. Vorrichtung zur Freigabe eines vordefinierten Kommunikationsmodus nach einem beliebigen der Ansprüche 1 bis 3, wobei die besagten Informationen, welche für die Fähigkeit, eine Kommunikation in dem besagten vordefinierten Modus aufzubauen, indikativ sind, Informationen in Bezug auf die Hardware-Version und/oder die Firmware-Version des zweiten Kommunikationsgeräts umfassen.

5. Vorrichtung zur Freigabe eines vordefinierten Kommunikationsmodus nach einem beliebigen der Ansprüche 1 bis 4, wobei das besagte Aktivierungsmittel (5) ebenfalls für das Einholen von Informationen in Bezug auf die besagte Kommunikationsleitung ausgelegt ist, und wobei das besagte Mittel zum Analysieren für das Berücksichtigen der besagten Informationen in Bezug auf die besagte Kommunikationsleitung ausgelegt ist.

6. Vorrichtung zur Freigabe eines vordefinierten Kommunikationsmodus nach einem beliebigen der vorstehenden Ansprüche, wobei das besagte Aktivierungsmittel in einer Software implementiert wird.

7. Netzwerkverwaltungsvorrichtung mit einer Vorrichtung zur Freigabe eines vordefinierten Kommunikationsmodus gemäß einem beliebigen der vorstehenden Ansprüche.

8. Verfahren zur Freigabe eines vordefinierten Kommunikationsmodus über eine Kommunikationsleitung zwischen einem ersten Kommunikationsgerät (2) und einem zweiten Kommunikationsgerät (3), wobei das besagte erste Kommunikationsgerät (2) und das besagte zweite Kommunikationsgerät (3) gemäß einem ADSL2- oder ADSL+-Standard arbeiten, wobei das besagte Verfahren die folgenden Schritte umfasst:
- Einholen von Informationen, die für die Fähigkeit, eine Kommunikation in dem besagten vordefinierten Modus über die besagte Kommunikationsleitung zwischen dem besagten ersten und dem besagten zweiten Kommunikationsgerät aufzubauen, indikativ sind, und
- Analysieren der besagten eingeholten Informationen, um die Fähigkeit, eine Kommunikation in dem besagten vordefinierten Modus aufzubauen, zu beurteilen,
- Freigeben des besagten vordefinierten Kommunikationsmodus, wenn in dem vorangehenden Schritt festgestellt wurde, dass eine Kommunikation in dem vordefinierten Modus möglich ist,
**dadurch gekennzeichnet, dass** der besagte Schritt des Analysierens das Analysieren der besagten eingeholten Informationen, welche für das Ergebnis eines Tests des korrekten Betriebs des vordefinierten Modus indikativ sind, umfasst,
und dass der besagte vordefinierte Modus ein Link State 2-Modus ist.

## Revendications

1. Dispositif (1) pour mettre en oeuvre un mode de communication prédéfini sur une ligne de communication entre un premier dispositif de communication (2) et un deuxième dispositif de communication (3), ledit premier dispositif de communication (2) et ledit deuxième dispositif de communication (3) fonctionnant conformément à une norme ADSL2 ou ADSL2+, ledit dispositif comprenant des moyens d'activation (5) conçus pour obtenir des informations indiquant la capacité d'établissement d'une communication dans ledit mode prédéfini sur ladite ligne de communication entre ledit premier dispositif de communication et ledit deuxième dispositif de communication et des moyens (7) pour analyser lesdites informations, lesdits moyens d'activation étant en outre conçus pour activer et désactiver ledit mode de communication prédéfini conformément à l'analyse desdites informations, **caractérisé en ce que** lesdits moyens pour analyser comprennent des moyens de détection conçus pour évaluer la capacité d'établissement d'une communication dans ledit mode prédéfini entre ledit premier dispositif de communication et ledit deuxième dispositif de communication en testant le bon fonctionnement du mode prédéfini et **en ce que** ledit mode prédéfini est un mode d'état de liaison 2.

2. Dispositif pour mettre en oeuvre un mode de communication prédéfini selon la revendication 1, lesdits moyens pour analyser comprenant en outre une base de données d'informations sur la capacité de prise en charge dudit mode de communication prédéfini.

3. Dispositif pour mettre en oeuvre un mode de communication prédéfini selon la revendication 1 ou 2, dans lequel lesdites informations indiquant la capacité d'établissement d'une communication dans ledit mode prédéfini comprennent des informations relatives au type dudit premier dispositif de communication.

4. Dispositif pour mettre en oeuvre un mode de communication prédéfini selon l'une quelconque des revendications 1 à 3, dans lequel lesdites informations indiquant la capacité d'établissement d'une communication dans ledit mode prédéfini comprennent des informations relatives à la version matérielle et/ou à la version logicielle et/ou à la version micrologicielle du deuxième dispositif de communication.

5. Dispositif pour mettre en oeuvre un mode de communication prédéfini selon l'une quelconque des revendications 1 à 4, lesdits moyens d'activation (5) étant également conçus pour obtenir des informations relatives à ladite ligne de communication et lesdits moyens pour analyser étant conçus pour prendre en compte lesdites informations relatives à ladite ligne de communication.

6. Dispositif pour mettre en oeuvre un mode de communication prédéfini selon l'une quelconque des revendications précédentes, lesdits moyens d'activation étant mis en oeuvre dans un logiciel.

7. Dispositif de gestion de réseau comprenant un dispositif pour mettre en oeuvre un mode de communication prédéfini selon l'une quelconque des revendications précédentes.

8. Procédé pour mettre en oeuvre un mode de communication prédéfini sur une ligne de communication entre un premier dispositif de communication (2) et un deuxième dispositif de communication (3), ledit premier dispositif de communication (2) et ledit deuxième dispositif de communication (3) fonctionnant conformément à une norme ADSL2 ou ADSL2+, ledit procédé comprenant les étapes suivantes
- obtenir des informations indiquant la capacité d'établissement d'une communication dans ledit mode prédéfini sur ladite ligne de communication entre ledit premier dispositif de communication et ledit deuxième dispositif de communication, et
- analyser lesdites informations obtenues pour évaluer la capacité d'établissement d'une communication dans le mode prédéfini,
- mettre en oeuvre ledit mode de communication prédéfini s'il est déterminé à l'étape précédente que la communication dans le mode prédéfini est possible.
**caractérisé en ce que** ladite étape d'analyse comprend l'analyse desdites informations obtenues avec des informations détectées indiquant le résultat d'un test du bon fonctionnement du mode prédéfini,
et **en ce que** ledit mode prédéfini est un mode d'état de liaison 2.
